# EUROPÄISCHE PATENTSCHRIFT

(11) **EP 1 144 660 B1**
(45) Veröffentlichungstag und Bekanntmachung des Hinweises auf die Patenterteilung: **21.11.2007**
(21) Anmeldenummer: 00914127.6
(22) Anmeldetag: 13.03.2000
(51) Int. Cl.: C12N 15/82, A23L 1/0522, A23L 1/16

(54) **GLASNUDEL**
GLASS NOODLE
NOUILLES CHINOISES

(30) Priorität: 17.03.1999 DE 19912009
(43) Veröffentlichungstag der Anmeldung: 17.10.2001
(73) Patentinhaber: Bayer CropScience AG, 40789 Monheim (DE)
(72) Erfinder: KLINGLER, Rudolf, D-13437 Berlin (DE); BUSCH, Karl-Georg, D-14532 Kleinmachnow (DE)
(74) Vertreter: Lederer, Franz
(86) Internationale Anmeldenummer: PCT/EP2000/002203
(87) Internationale Veröffentlichungsnummer: WO 2000/054605

(56) Entgegenhaltungen:
- WO-A-97/11188
- DE-A- 19 509 695
- DE-A- 19 636 917
- US-A- 4 871 572
- T.KASEMSUWAN, T.BAILEY, J.JANE: "Preparation of Clear Noodles with Mixtures of Tapioca and High-Amylose Starches" CARBOHYDRATE POLYMERS., Bd. 36, 1998, Seiten 301-312, XP002140866 APPLIED SCIENCE PUBLISHERSLTD. BARKING., GB ISSN: 0144-8617
- Y.S.KIM & AL: "Suitability of Edible Bean and Potato Starches for Starch Noodles" CEREAL CHEMISTRY., Bd. 73, Nr. 3, 1996, Seiten 302-308, XP002140867 MINNEAPOLIS US

## Beschreibung

Die vorliegende Erfindung betrifft ein Verfahren zur Herstellung von Glasnudeln unter Verwerdung von gentechnisch modifizierter Stärke, eine Glasnudel, die unter Verwendung gentechnologisch modifizierte Stärke hergestellt wurde, sowie die Verwendung von gentechnisch modifizierter Stärke zur Herstellung von Glasnudeln und sturzfähigen Gelen.

Die wesentlichen Merkmale der erfindungsgemäßen Glasnudeln sind durch physikalisch-chemischen Eigenschaften wie Wasseraufnahmevermögen, Transparenz, Kochverlust und Elastizität charakterisierbar und definieren somit die Erscheinungsform, Garverhalten sowie die Textur (Bißfestigkeit etc.) der Nudel.

Für die Herstellung von Glasnudeln wird üblicherweise zunächst aus Mungbohnenstärke und Wasser ein Kleister hergestellt, aus dem durch die weitere Zugabe von Stärke ein Teig zubereitet wird, der anschließend, z.B. durch feine Düsen in siedendes Wasser extrudiert werden kann. Nach einer kurzen Garzeit werden die Nudeln gekühlt bzw. abgeschreckt und danach getrocknet.

Die ausschließliche Verwendung von Mungbohnenstärke bei der Nudelherstellung führt zu einer qualitativ sehr hochwertigen Glasnudel, die getrocknet eine weiße Farbe aufweist, nach dem Kochen bzw. Garen transparent erscheint, eine geringe Wasseraufnahmekapazität und eine hohe Zugfestigkeit bzw. hohe Elastizität besitzt.

Da Mungbohnenstärke in einem sehr aufwendigen Herstellungsverfahren gewonnen wird, ist sie vergleichweise teuer. Es sind daher viele Versuche unternommen worden, die Mungbohnenstärke durch preiswertere, z.T. chemisch modifizierte Stärken aus Weizen, Kartoffel, Tapioka, Sago, Cassava, Mais etc. ganz oder teilweise zu substituieren (Kim et al., 1996, Cereal Chem. 73(3), 302-308, Kasemsuwan & Jane, 1995, AACC Annual Meetings, Abstract No. 185, Kasemsuwan et al. 1998, Carbohydrate Polymers 32, 301-312, Chang, 1983, Proceedings of the 6th Int. Congress of Food Sci. And Techn., 1, 111-112, Collado & Corke, 1997, Cereal Chem. 74(2), 182-187).

Die Substitution der Mungbohnenstärke durch preiswertere Stärken bei der Teigherstellung bringt allerdings verschiedene Nachteile mit sich, die primär zu einer erheblich reduzierten Qualität, d.h. reduzierten Elastizität und einer höheren Wasseraufnahmekapazität (weicheren Konsistenz) der Nudel führen.

Die Aufgabe der vorliegenden Erfindung besteht daher in der Bereitstellung einer alternativen Herstellung von Glasnudeln hoher Qualität bei guter Wirtschaftlichkeit.

Eine weitere Aufgabe der Erfindung ist es, eine Alternative zu der limitierten Verfügbarkeit von Mungbohnenstärke, speziell zur Glasnudelherstellung zu liefern. Weiterhin besteht die Aufgabe der Erfindung darin, eine Alternative für die Verwendung von ggf. chemisch modifizierten Stärken unterschiedlicher Herkunft bei der Herstellung von Glasnudeln bereitzustellen, um Produktionszeiten und -kosten zu reduzieren.

Diese und andere Aufgaben werden mit der vorliegenden Erfindung wirkungsvoll gelöst, wie aus der nachstehenden Beschreibung und den aufgeführten Beispielen hervorgeht.

Die modernen Methoden der Gentechnologie stellen eine Vielzahl von transgenen, stärke-produzierenden Pflanzen zur Verfügung, insbesondere Mais, Kartoffel, Weizen oder Reis, aus denen Stärke, d.h. im Sinne der vorliegenden Erfindung "gentechnisch modifizierte Stärke" isoliert werden können, die zum Teil erheblich veränderte physikochemische Eigenschaften aufweisen, wie z.B. eine Veränderung im Amylose-Amylopektin-Verhältnis, der Kettenlängenverteilung des Amylopektins, dem Phosphorylierungsgrad sowie dem Mineral- (Ca²⁺+, Mg²⁺, etc.) oder dem Lipidgehalt etc..

Aufgrund der veränderten Eigenschaften der besagten gentechnisch modifzierten Stärken ergeben sich bei dem ungeheuer breiten Einsatz von Stärken in der Industrie und im Lebensmittelbereich zum Teil völlig neuartige und auch sehr überraschende Anwendungsmöglichkeiten.

Es wurde nun gefunden, daß überraschenderweise Stärken aus gentechnisch modifizierten Pflanzen (GMS), vorzugsweise aus Tapioka, Mais, Weizen und/oder Kartoffel, insbesondere aus Weizen und/oder Kartoffel und ganz besonders aus Kartoffel, mit einem Amylosegehalt von größer als 25 %, vorzugsweise > 30, insbesondere >33 % (Amylosegehalt ermittelt nach der Methode von Hovenkamp-Hermelink et al., 1988, Potato Research 31: 241-246) und einer Gelfestigkeit von etwa 90-160 g, vorzugsweise 100-160 g, insbesondere 110-160 g (Gelfestigkeit ermittelt gemäß Beispiel 3 B) hervorragend zur Herstellung von Glasnudeln oder sturzfähigen Gelen geeignet sind.

Gegenstand der vorliegenden Erfindung ist daher ein Verfahren zur Herstellung von Glasnudeln, worin Stärke, speziell Stärke aus Tapioka, Kartoffel, Mais und/oder Weizen, vorzugsweise Kartoffel und/oder Weizen, insbesondere Kartoffel mit einem Amylosegehalt von mindestens 25%, vorzugsweise >30%, insbesondere >33% und einer Gelfestigkeit von etwa 90-160 g, vorzugsweise 100-160 g, insbesondere 110-160 g in üblicher Weise zu einer Glasnudel verarbeitet wird, wobei vorzugsweise mindestens 30% , besonders bevorzugt etwa 30-90 %, insbesondere etwa 35-80 % und ganz besonders bevorzugt etwa 40-65 % der üblicherweise eingesetzten Mungbohnenstärke durch besagte Stärke ersetzt wird.

Das erfindungsgemäße Verfahren zur Herstellung von Glasnudeln bevorzugt des weiteren Stärken aus Tapioka, Kartoffel, Mais und/oder Weizen, die einen Phosphatgehalt von mindestens 0,5 nmol, vorzugsweise 1 nmol und insbesondere 1,5 nmol Glucose-6-phosphat (G6P)/mg Stärke enthalten (ermittelt nach dem in Beispiel 8 b der internationalen Patentanmeldung WO 97/11188 A1 beschriebenen enzymatischen Verfahren).

Ein weiterer Erfindungsgegenstand ist schließlich eine Glasnudel gekennzeichnet durch eine Elastizität von mindestens 1,5 g/cm vorzugsweise mindestens 1,7 g/cm und/oder einer Wasseraufnahmekapazität von maximal 550 %, vorzugsweise maximal 530%, insbesondere maximal 500% bei einem Durchmesser von etwa 0,4 bis 0,45 mm der getrockneten Nudel, erhältlich nach dem erfindungsgemäßen Verfahren zur Herstellung von Glasnudeln, worin Stärke, speziell Stärke aus Tapioka, Kartoffel, Mais und/oder Weizen, vorzugsweise Kartoffel und/oder Weizen, insbesondere Kartoffel mit einem Amylosegehalt von mindestens 25 %, vorzugsweise >30%, insbesondere > 33% und einer Gelfestigkeit von etwa 90-160 g, vorzugsweise 100-160 g, insbesondere 110-160 g in üblicher Weise zu einer Glasnudel verarbeitet wird, wobei vorzugsweise mindestens 30% , insbesondere etwa 30-90 %, insbesondere bevorzugt etwa 35-80 %, und ganz besonders bevorzugt etwa 40-65% der üblicherweise eingesetzten Mungbohnenstärke durch besagte Stärke substituiert wird und besagte Stärke in einer weiteren, bevorzugten Ausführungsform einen Phosphatgehalt von mindestens 0,5 nmol, vorzugsweise 1 nmol und insbesondere 1,5 nmol G6P/mg Stärke aufweist.

Ebenso ist ein Erfindungsgegenstand die Verwendung einer Stärke, speziell einer Stärke aus Tapioka, Kartoffel, Mais und/oder Weizen, vorzugsweise Kartoffel und/oder Weizen, insbesondere Kartoffel mit einem Amylosegehalt von mindestens 25 %, vorzugsweise > 30%, insbesondere >33% und einer Gelfestigkeit von etwa 90-160 g, vorzugsweise 100-160 g, insbesondere 110-160 g sowie einem Phosphatgehalt von mindestens 0,5 nmol, vorzugsweise 1 nmol und insbesondere 1,5 nmol G6P/mg Stärke in einem Verfahren zur Herstellung von Glasnudeln oder sturzfähigen Gelen.

Soweit die Verwendung besagter Stärken die Herstellung sturzfähiger Gele betrifft, wird zu deren Herstellung vorzugsweise eine etwa 2-15 %ige Aufkochung besagter Stärke auf eine Temperatur von 0-30 °C, vorzugsweise Raumtemperatur (d.h. etwa 15-25 °C) abgekühlt. Ebenso betrifft die vorliegende Erfindung ein Verfahren zur Herstellung sturzfähiger Gele, worin eine Stärke, speziell eine Stärke aus Tapioka, Kartoffel, Mais und/oder Weizen, vorzugsweise Kartoffel und/oder Weizen, insbesondere Kartoffel mit einem Amylosegehalt von mindestens 25 %, vorzugsweise > 30%, insbesondere >33% und einer Gelfestigkeit von etwa 90-160 g, vorzugsweise 100-160 g, insbesondere 110-160 g sowie einem Phosphatgehalt von mindestens 0,5 nmol, vorzugsweise 1 nmol und insbesondere 1,5 nmol G6P/mg Stärke in einer etwa 2-15 %igen Suspension , vorzugsweise 3-12%igen, insbesondere 4-10%igen Suspension aufgekocht und auf eine Temperatur von etwa 0-30°C, vorzugsweise etwa 15-25 °C abgekühlt wird.

Der Begriff "gentechnologisch modifzierte Stärken" (GMS) bezeichnet im Sinn der vorliegenden Erfindung Stärken aus gentechnologisch modifizierten Pflanzen, vorzugsweise aus Tapioka, Mais, Weizen und/oder Kartoffel, insbesondere aus Weizen und/oder Kartoffel, speziell aus Kartoffel, die mittels gentechnologischer Verfahren modifiziert wurden, vorzugsweise bezüglich ihrer Seitenkettenverteilung (z.B. ihres Amylosegehalts), ihres Phosphatgehalts und/oder ihrer Gelbildungseigenschaften, die z.B. mittels des Verhältnisses aus End- zu Peakviskosität in einem RVA-Profil (vgl. Bsp. 3 A) oder ihrer Gelfestigkeit (vgl. Bsp. 3 B) charakterisert werden können. GMS sind z.B. aus den nachfolgenden Patentanmeldungen oder Patentschriften bekannt, wobei die nachfolgende Aufzählung nicht abschliessend ist:
WO 90/12876 A1, WO 91/19806 A1, WO 92/11375 A1, WO 92/11376 A1,
WO 92/11382 A1, WO 92/14827 A1, WO 94/09144 A1, WO 94/11520 A1,
WO 95/04826 A1, WO 95/07355 A1, WO 95/26407 A1, WO 95/34660 A1,
WO 95/35026 A1, WO 96/15248 A1, WO 96/19581 A1, WO 96/27674 A1,
WO 96/34968 A1, WO 97/04112 A1, WO 97/04113 A1, WO 97/11188 A1,
WO 97/16554 A1, WO 97/20040 A1, WO 97/22703 A1, WO 97/45545 A1,
WO 98/11181 A1, WO 98/11228 A1, WO 98/15621 A1, WO 98/37213 A1,
WO 98/37214 A1, sowie CA 2,061,443, DE 19820607.0, DE 19820608.9,
DE 19836097.5, DE 19836098.3, DE 19836099.1, EP-A-0 521 621,
EP-A-0 703 314, EP-A-0 737 777, EP-A-0 779 363 oder US 5,300,145.

Die WO 97/11188 A1 beschreibt die nachfolgend in den Beispielen eingesetzten GMS ausführlich; der Inhalt der WO 97/11188 A1 stellt hiermit ausdrücklich durch Referenz einen Bestandteil der Beschreibung dar.

Bei der Herstellung von Glasnudeln lassen sich durch die erfindungsgemäße Verwendung von GMS in dem erfindungsgemäßen Verfahren mindestens 30 % der üblicherweise benötigten Mungbohnenstärke ersetzen, vorzugsweise etwa 30-90 %, besonders bevorzugt etwa 35-80 %, insbesondere etwa 40-65%, ohne daß ein signifikanter Qualitätsverlust der Glasnudel eintritt.

Eine weitere bevorzugte Ausführungsform des erfindungsgemäßen Verfahrens umfaßt zusätzlich die Verfahrenschritte
a) Herstellung eines Kleisters unter Verwendung von Mungbohnenstärke und
b) Herstellung eines Nudelteigs unter Verwendung besagter GMS.

Als "Glasnudel" im Sinne der vorliegenden Erfindung ist jede Nudel zu verstehen, die eine Elastizität (Zugefestigkeit/Dehnlänge) von mindestens 1,5 g/cm, vorzugsweise von mindestens 1,7 g/cm und/oder eine Wasseraufnahmekapazität von maximal 550 % (w/w), vorzugsweise von maximal 530 %, besonders bevorzugt von maximal 500 % aufweist, gemessen bei einem Nudeldurchmesser von etwa 0,4-0,45 mm. Der Begriff "Glasnudel" ist jedoch nicht auf Nudeln mit einem Durchmesser von etwa 0,4-0,45 mm beschränkt, sondern betrifft jede Nudel gleicher Zusammensetzung.

"Elastizität" im Sinne der vorliegenden Erfindung ist als die Zugfestigkeit/Dehnlänge der gekochten Nudel definiert und wurde durch Zugversuche mittels eines Texture Analysers (Texture Analyser TA-XT2, Stable Micro Systems, UK) ermittelt. Hierzu wurden einzelne Glasnudeln (Durchmesser von 0,4 - 0,45 mm) nach dem Kochen (100 s bei 100°C) und Kühlen (60 s bei 20°C) um eine obere sowie untere runde Halterung des Gerätes gewickelt, so daß der Zwischenraum 50 mm betrug. Die Nudeln wurden dann mit 1 mm/s bis zum Zerreißen gedehnt und dabei ein Kraft-Weg-Diagramm aufgezeichnet. Aus der maximal erforderlichen Kraft zum Zerreißen einer Nudel und der Dehnung der Nudel zum Zeitpunkt des Zerreißens wurde das Verhältnis Kraft/Strecke in g/cm als Maß für die Elastitzität berechnet.

Der "Kochverlust" wurde als Trocknungsrückstand des Kochwassers, bezogen auf die eingesetzte Nudelteigmasse angegegben, die "Transparenz" wurde durch optische Bonitur ermittelt.

"Wasseraufnahmekapazität" im Sinne der Beschreibung ist definiert als die Wassermenge in g, die während des Kochvorgangs (100 s bei 100°C) von der Nudel aufgenommen wurde, bezogen auf die eingesetzte Nudelteigmasse.

### Beschreibung der Abbildungen:

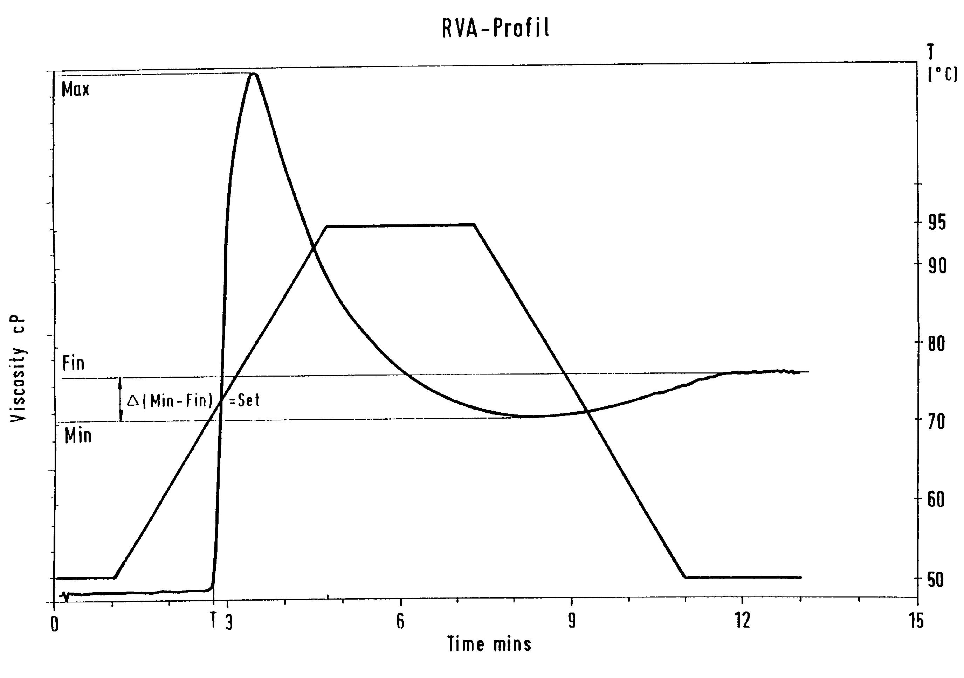

- Fig. 1:: stellt ein schematisches RVA-Temperaturprofil (Viskosität vs. Zeit [min]) dar mit den viskosimetrischen Parametern T=Verkleisterungstemperatur, Temperatur zum Zeitpunkt des Verkleisterungsbeginns; Max bezeichnet die maximale Viskosität (Peakviskosität); Min bezeichnet die minimale Viskosität; Fin bezeichnet die finale Viskosität (Endviskosität); Set ist die Differenz (Δ) aus Min und Fin (Setback).

Die nachfolgenden Beispiele sollen den Erfindungsgegenstand verdeutlichen und illustrieren. Die Beispiele sind daher keinesfalls als die vorliegende Erfindung beschränkend zu verstehen.

### Beispiele:

### Beispiel 1: Glasnudelherstellung

Zur Zubereitung des Nudelteigs wurde zunächst ein Stärkekleister bestehend aus 49 Teilen Wasser und 6 Teilen Stärke (Kontrolle: Mungbohnenstärke) 15 min bei 90°C hergestellt. Anschließend wurde durch sukzessive Zugabe von 55 Teilen weiterer Stärke ein Teig zubereitet und 15 min lang bei 40°C zu einer homogenen Masse geknetet. Der homogene Nudelteig wurde durch feine Düsen von 1,5 mm Durchmesser in siedendes Wasser extrudiert und nach 100 s Kochzeit wurden die Nudeln für 60 s in 20°C kaltem Wasser abgeschreckt.

Nach anschließender Lufttrocknung wurden Nudeln mit einem Durchmesser von 0,4 bis 0,45 mm erhalten.

### Beispiel 2: Physikochemische Charakterisierung der Glasnudeln

Gemäß Beispiel 1 hergestellte Nudeln verschiedener Stärkezusammensetzung wurden auf ihre unterschiedlichen Eigenschaften hin untersucht.

Die Substitution der Mungbohnenstärke (MB) durch die nachfolgend aufgeführten Stärken erfolgte in der Weise, daß zur Kleisterbereitung ausschließlich Mungbohnenstärke und zur Teigbereitung unterschiedliche Anteile alternativer Stärken verwendet wurden.

**Tabelle 1: Charakterisierung der Glasnudeln**

| Bsp. Nr. | Stärkezusammensetzung | Wasseraufnahmekapazität (%) | Elastizität (g/cm) | Kochverlust (%) |
|---|---|---|---|---|
| 1 | MB (100 %) | 432 | 2,15 | 6,1 |
| 2 | MB : PO (50:50) | 529 | 1,35 | 6,8 |
| 3 | MB : PO (25:75) | 576 | 0,99 | 6,8 |
| 4 | MB : GMS 1 (50:50) | 492 | 1,72 | 6,4 |
| 5 | MB : GMS 1 (25:75) | 529 | 1,56 | 6,8 |
| 6 | MB : GMS 2 (50:50) | 491 | 1,72 | 7,2 |
| 7 | MB: GMS 3 (50:50) | 498 | 1,52 | 5,5 |
| 8 | MB : GMS 4 (50:50) | 487 | 1,70 | 6,5 |
| 9 | MB : GMS 5 (50:50) | 531 | 1,65 | 5,8 |
| 10 | PAL (100) | 454 | 1,92 | 5,7 |
| 11 | PAL: GMS 1 (50:50) | 510 | 1,21 | 7,0 |

| | | | | |
|---|---|---|---|---|
| Die in Tabelle 1 verwendeten Abkürzungen bedeuten: MB = native Mungbohnenstärke, Importeur: Asia Mekong, Hamburg, BRD PO = konventionelle native Kartoffelstärke, Emsland-Stärken, Emlichheim, BRD GMS 1 = gentechnisch modifizierte Kartoffelstärke mit einem Amylosegehalt von etwa 37%, erhältlich gemäß Beispiel Nr. 10 der internationalen Patentanmeldung WO 97/11188 A1 GMS 2 = gentechnisch modifizierte Kartoffelstärke mit einem Amylosegehalt von etwa 33,8%, erhältlich gemäß Beispiel Nr. 10 der internationalen Patentanmeldung WO 97/11188 A1 GMS 3 = gentechnisch modifizierte Kartoffelstärke mit einem Amylosegehalt von etwa 27,5%, erhältlich gemäß Beispiel Nr. 6 der internationalen Patentanmeldung WO 97/11188 A1 GMS 4 = gentechnisch modifizierte Kartoffelstärke mit einem Amylosegehalt von etwa 31,7%, erhältlich gemäß Beispiel Nr. 6 der internationalen Patentanmeldung WO 97/11188 A1 GMS 5 = gentechnisch modifizierte Kartoffelstärke mit einem Amylosegehalt von etwa 31,9%, erhältlich gemäß Beispiel Nr. 7 der internationalen Patentanmeldung WO 97/11188 A1 PAL = native Palerbsenstärke, Hersteller, Cosucra, Fonsenoy, Belgien | | | | |

### Beispiel 3: Charakterisierung der Stärkeeigenschaften

### 3 A) Viskosität

Die Verkleisterungs- bzw. Viskositätseigenschaften von Stärkeproben kann mit einem Rapid Visco Analyser, Newport Scientific Pty Ltd, Investment Support Group, Warriewood NSW 2102, Australien, aufgezeichnet werden.

Bei der Messung mittels des Rapid Visco Analysers (RVA) wird eine Suspension von 2 g Stärke in 25 ml Wasser folgendem Heizprogramm unterzogen: 60 s bei 50°C suspendieren, aufheizen von 50°C auf 95°C mit 12°C/min, 2,5 min konstant halten, abkühlen auf 50°C mit 12°C/min und abermals 2 min konstant halten. Das RVA-Temperaturprofil liefert die viskosimetrischen Parameter der untersuchten Stärken für die maximale (Max) und Endviskosität (Fin), die Verkleisterungstempera-tur (T), die nach der maximalen Viskosität auftretende minimale Viskosität (Min) sowie die Differenz aus minimaler und Endviskosität (Setback, Set) (vgl. Fig. 1).

Der Quotient der End- zu Peakviskosität nativer Kartoffelstärke aus Kartoffeln der Sorte Désireé, der auf diese Weise bestimmt wurde, beträgt etwa 0,4.

### 3 B) Gelfestigkeit

Zur Bestimmung der Gelfestigkeit mittels eines Texture Analyser wurden 2 g Stärke in 25 ml Wasser verkleistert (vgl. Messung mittels RVA) und anschließend 24 h lang bei 25°C luftdicht verschlossen gelagert. Die Proben wurden unter der Sonde (runder Stempel) eines Texture Analysers TA-XT2 (Stable Micro Systems) fixiert und die Gelfestigkeit mit folgenden Parameter-Einstellungen bestimmt:

| | |
|---|---|
| Test-Geschwindigkeit | 0,5 mm/s |
| Eindringtiefe | 7 mm |
| Kontaktfläche (des Stempels) | 113 mm² |
| Druck/Kontaktfläche | 2 g |

## Patentansprüche

1. Verfahren zur Herstellung von Glasnudeln, worin Stärke mit einem Amylosegehalt von mindestens 25 %, einer Gelfestigkeit, ermittelt gemäß Beispiel 3 B, von etwa 90-160 g und einem Phosphatgehalt von mindestens 0,5 nmol Glucose-6-phosphat /mg Stärke in üblicher Weise zu einer Glasnudel verarbeitet wird.

2. Verfahren nach Anspruch 1, worin mindestens 30% des Anteils an üblicherweise eingesetzter Mungbohnenstärke durch die in Anspruch 1 definierte Stärke substituiert wird.

3. Glasnudel erhältlich nach einem Verfahren gemäß einem oder mehreren der Ansprüche 1 und 2, **gekennzeichnet durch** eine Elastizität, ermittelt gemäß der Beschreibung, von mindestens 1,5 g/cm gemessen bei einem Durchmesser von etwa 0,4 bis 0,45 mm der getrockneten Nudel.

4. Glasnudel erhältlich nach einem Verfahren gemäß einem oder mehreren der Ansprüche 1 und 2, **gekennzeichnet durch** eine Wasseraufnahmekapazität, definiert als die Wassermenge in g, die während des Kochvorgangs - 100s bei 100°C - von der Nudel aufgenommen wurde, bezogen auf die eingesetzte Nudelmasse von maximal 550 % gemessen bei einem Durchmesser von etwa 0,4 bis 0,45 mm der getrockneten Nudel.

5. Verwendung einer Stärke wie in Anspruch 1 definiert zur Herstellung von Glasnudeln.

6. Verfahren zur Herstellung eines sturzfähigen Geles, worin eine etwa 2-15 %ige Aufkochung einer in Anspruch 1 definierten Stärke aufgekocht und auf eine Temperatur von unterhalb 30 °C abgekühlt wird.

7. Verwendung einer in Anspruch 1 definierten Stärke zur Bildung eines sturzfähigen Geles, indem eine etwa 2-15 %ige Aufkochung besagter Stärke auf eine Temperatur von unterhalb 30 °C abgekühlt wird.

## Claims

1. A process for producing glass noodles, in which starch having an amylose content of at least 25%, a gel strength of about 90-160 g, determined according to Example 3B, and a phosphate content of at least 0.5 nmol of glucose-6-phosphate/mg of starch is processed in a conventional manner to form a glass noodle.

2. The process as claimed in claim 1, wherein at least 30% of the content of the mung bean starch usually used is replaced by the starch specified in claim 1.

3. A glass noodle which is obtainable by a process as claimed in one or more of claims 1 and 2, wherein the glass noodle has an elasticity of at least 1.5 g/cm, determined according to the description and measured at a diameter from about 0.4 to 0.45 mm of the dried noodle.

4. A glass noodle obtainable by a process as claimed in one or more of claims 1 and 2, wherein the glass noodle has a water absorption capacity of a maximum of 550%, defined as the amount of water taken up in g by the noodle during the cooking process - 100s at 100°C - based on the initial noodle mass, at a diameter from about 0.4 to 0.45 mm of the dried noodle.

5. The use of a starch as defined in claim 1 for producing glass noodles.

6. A process for producing a demoldable gel, which comprises boiling a roughly 2-15% strength suspension of a starch defined in claim 1 and cooling it to a temperature below 30°C.

7. The use of a starch defined in claim 1 to form a demoldable gel by cooling a roughly 2-15% strength boiled suspension of said starch to a temperature below 30°C.

## Revendications

1. Procédé de fabrication de nouilles transparentes, dans lequel de l'amidon ayant un taux d'amylose d'au moins 25 %, une résistance de gel, déterminée selon l'exemple 3B, d'environ 90 à 160 g et une teneur en phosphate d'au moins 0,5 nmole de glucose-6-phosphate/mg d'amidon est transformé de manière usuelle pour donner une nouille transparente.

2. Procédé selon la revendication 1 dans lequel au moins 30 % de la part d'amidon de haricot mungo utilisé usuellement est substitué par l'amidon défini dans la revendication 1.

3. Nouille transparente que l'on peut obtenir par un procédé selon une ou plusieurs des revendications 1 et 2, **caractérisée en ce qu'**une élasticité, déterminée selon la description, d'au moins 1,5 g/cm est mesurée pour un diamètre d'environ 0,4 à 0,45 mm de la nouille séchée.

4. Nouille transparente que l'on peut obtenir par un procédé selon une ou plusieurs des revendications 1 et 2, **caractérisée en ce qu'**une capacité d'absorption d'eau, définie comme étant la quantité d'eau en g qui est absorbée par la nouille pendant le processus de cuisson (100 s à 100°C), par rapport à la masse de nouilles utilisée, d'au maximum 550 % est mesurée pour un diamètre d'environ 0,4 à 0,45 mm de la nouille séchée.

5. Utilisation d'un amidon défini dans la revendication 1 pour la fabrication de nouilles transparentes.

6. Procédé de fabrication d'un gel ferme, dans lequel une préparation bouillie d'environ 2 à 15 % d'un amidon défini dans la revendication 1 est amenée à ébullition et est refroidie à une température inférieure à 30°C.

7. Utilisation d'un amidon défini dans la revendication 1 pour former un gel ferme, en refroidissant une préparation bouillie d'environ 2 à 15 % de l'amidon mentionné ci-dessus à une température inférieure à 30°C.
